# EUROPEAN PATENT APPLICATION

(11) **EP 1 865 456 A1**
(43) Date of publication of application: **12.12.2007**
(21) Application number: 06123938.0
(22) Date of filing: 13.11.2006
(51) Int. Cl.: G06Q 30/00

(54) **System for distributing news items in electronic format**

(30) Priority: 07.06.2006 IT TV20060097
(71) Applicant: Syen S.r.l., 31033 Castelfranco Veneto TV (IT)
(72) Inventor: Cusinato, Andrea, 31033, Castelfranco Veneto TV (IT)
(74) Representative: Modiano, Micaela Nadia

(57) **Abstract**

A system for distributing news items in electronic format, comprising at least one news distribution unit (2), which is connected to at least one news editorial office (4) over a data communications network (3), and at least one electronic audio file player (5), which can be connected detachably to any news distribution unit, the news distribution unit (2) being programmed to retrieve news items in electronic format from an editorial office (4) over the data communications network (3) and to store these news items in the removable player (5), so that the player (5) can play the news items in audio format.

## Description

The present invention relates to a system for distributing news items in electronic format.

Information systems currently use print, radio and television newscasts and news bulletins available on websites to spread and distribute news items.

Reading news items in print and on the Web entails using one's hands and sight and is therefore unfeasible in certain situations, for example while driving a car or when the reader is a disabled individual.

Radio and television are instead not frequently available when one is out of one's home and in any case news bulletins broadcast with these media are broadcast only at certain times.

The aim of the present invention is to obviate the above mentioned drawbacks, by providing a news distribution system which can be used in any situation the reader is in.

Within this aim, an object of the invention is to provide a news distribution system which does not tie the hands and sight of the reader and thus becomes usable even while driving a car.

Another object of the invention is to provide a news distribution system which allows to provide the reader with news updated to the last hour.

Moreover, another object of the present invention is to speed up the distribution of daily newspapers that are normally available in paper format, achieving a saving in terms of paper use and disposal.

Another object of the invention is to provide a news distribution system which is highly reliable, relatively easy to provide and at competitive costs.

This aim and these and other objects, which will become better apparent hereinafter, are achieved by a system for distributing news items in electronic format, characterized in that it comprises at least one news distribution unit, which is connected to at least one news editorial office over a data communications network, and at least one electronic audio file player, which can be carried by a user and can be connected detachably to any news distribution unit, the news distribution unit being programmed to retrieve news items in electronic format from an editorial office over the data communications network and to store these news items in the removable player, so that the player can play said news items in audio format.

Once the news items have been stored locally, the player, of the portable type, can therefore be used at any time, in any place and in any situation by the user, who can listen to the news items for example by means of simple earpieces.

Further characteristics and advantages of the invention will become better apparent from the following detailed description of a preferred but not exclusive embodiment of the system according to the invention, illustrated by way of non-limiting example in the accompanying drawings, wherein:
Figure 1 is a block diagram of the system according to the invention;
Figure 2 is a diagram of the structure of the distribution unit used in the invention;
Figure 3 is a schematic front and side view of the player used in the invention;
Figure 4 is a block diagram of the components of the distribution unit of Figure 2;
Figure 5 is a block diagram of the components of the player of Figure 3.

With reference to the figures, a news distribution system according to the invention, generally designated by the reference numeral 1, comprises a plurality of news distribution distribution units 2, which are connected to a data communications network 3, preferably the Internet, and are located in places which are normally accessible to a potential user, for example in bars or restaurants, along roads and highways, in rail stations, and so forth.

The data communications network 3 can also be any network capable of broadcasting data in digital format, for example a communications network of the wireless type or a mobile telephone network.

Servers of editorial offices 4 of respective daily newspapers or, more generally, of editorial offices of journalists, are connected to the same network 3 and are capable of sending on request news items in electronic format over the data communications network 3.

The news items in electronic format are preferably audio files which reproduce in spoken form news items or contents of daily newspapers, which are normally distributed in paper form or via radio and television media. These audio files, for example, can be in the MP3 format or can be accompanied or replaced by text files which can be read by means of ordinary software for the spoken playback of written and/or printable paper documents.

Preferably, the editorial offices 4 comprise Web portals which are capable of providing, for a fee, files which can be downloaded by means of an HTTP or FTP or proprietary protocol.

The news distribution units 2 comprise suitable hardware and software means for accessing the data communications network 3, for authenticating themselves with the editorial offices 4 and for receiving from them the news items in electronic format and providing said news items to an external player.

The invention therefore provides for suitable electronic portable players of news items 5, which can be connected directly to any one of the distribution units 2 and are suitable to receive and store in a local memory the news items in electronic format stored in the distribution units 2.

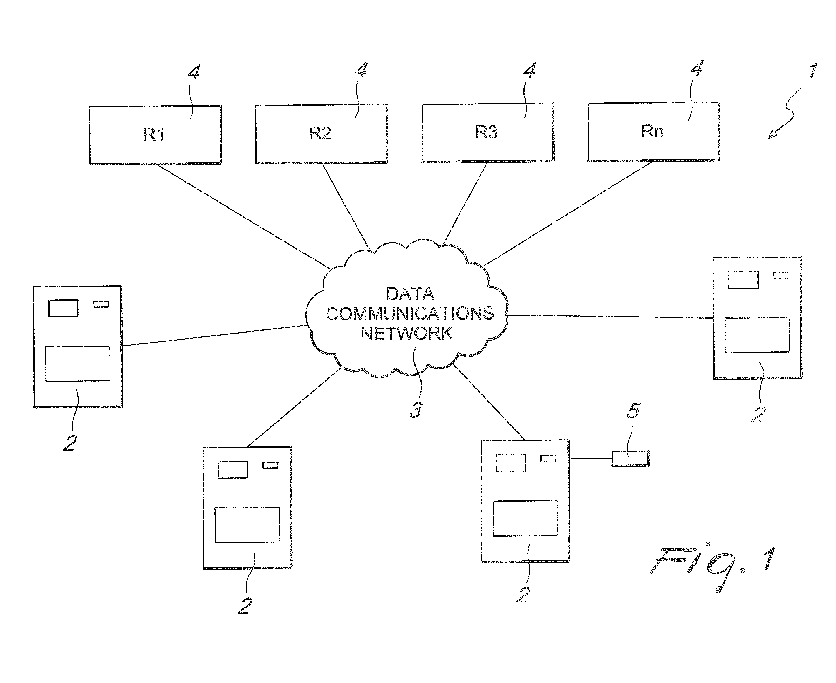

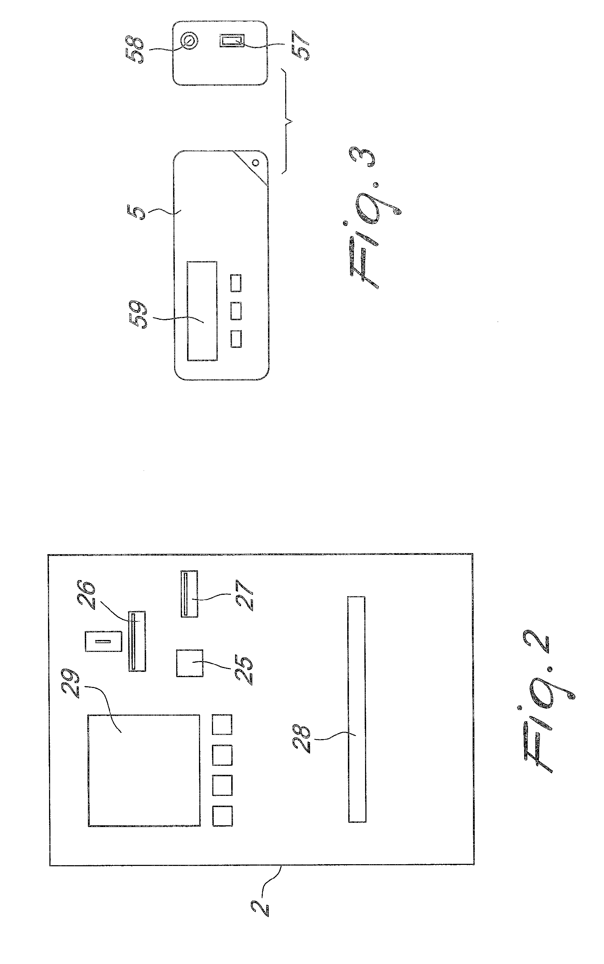

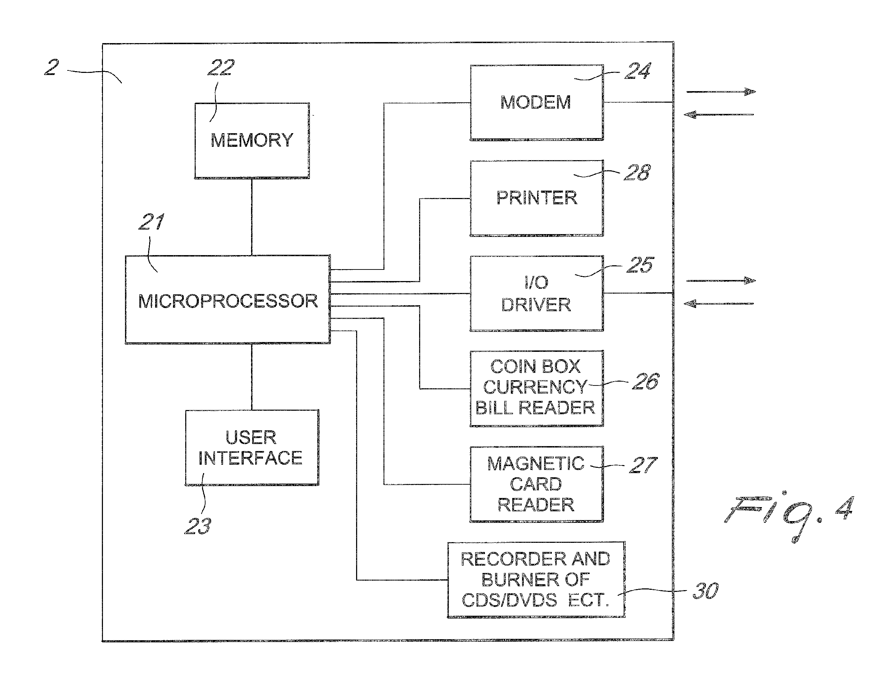

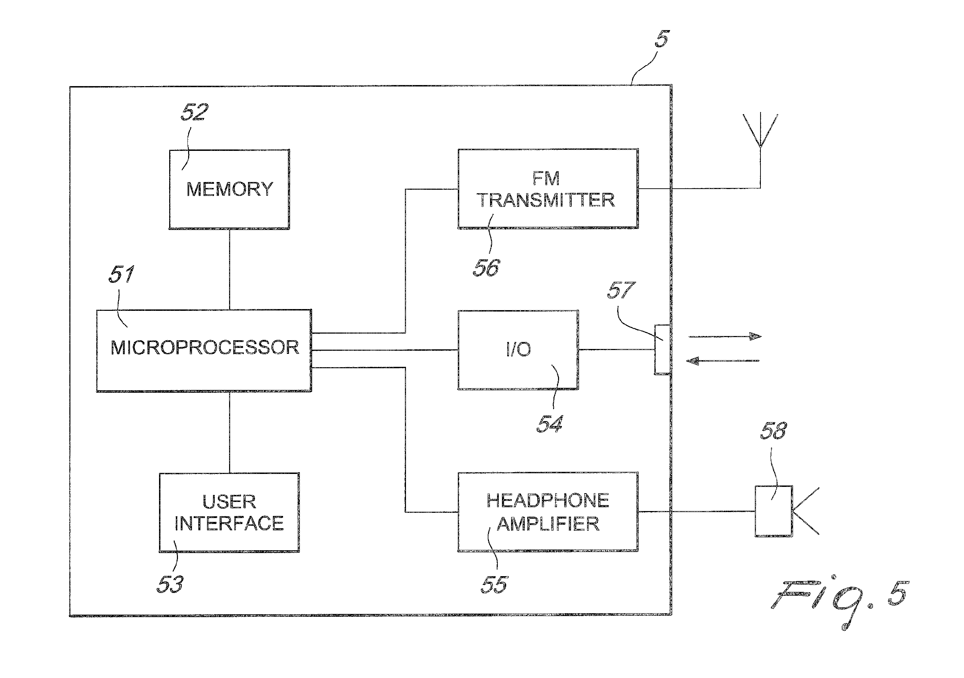

With reference to Figures 2 and 4, a news distribution unit 2 comprises a microprocessor 21 which is programmed to operate the news distribution unit according to the invention by means of instructions which are stored permanently in an internal memory thereof.

The microprocessor 21 is connected to a memory 22 for storing the news items in electronic format received from the data communications network 3 and a user interface 23, which comprises preferably a display of the touchscreen type or a display-keyboard assembly 29, by means of which a user can select manually the news items to be downloaded, for example choose particular newspapers or news bulletins, or can display information related to the operation of the distribution unit 2.

Further, the distribution unit comprises a modem 24, which is suitable to connect the microprocessor 21 to the data communications network 3 and an I/O driver 25 (for example of the USB type), which allows to connect the microprocessor to the portable player 5 by means of an appropriate socket.

Finally, the distribution unit 2 comprises a coin slot or currency bill reader 26 and/or a prepaid magnetic card reader 27 for purchasing the news items in electronic format and optionally a printer 28 for printing the news items in paper format. In addition to the printer, or as an alternative thereto, the distribution unit can have a tool for writing data on a physical memory medium, for example of the magnetic or optical type. Figure 4 illustrates a DVD writer 30, which is suitable to store the news items on a DVD or CD.

With reference to Figures 3 and 5, the portable news item player 5 instead comprises a microprocessor 51 which stores the instructions suitable for the operation of said player. The player 5 can be an audio player of a known type, of the kind currently used to play MP3 files.

A memory 52 and a user interface 53 are connected to the microprocessor 51 respectively in order to store the news items in electronic format downloaded from the distribution unit 2 and to display and select the news items to be played back in audio format or the information needed for the operation of the reader.

Moreover, the microprocessor 51 is connected to an I/O driver, in order to download the news items in electronic format from a news distribution unit 2 by means of a socket 57 (for example of the USB type), to an audio amplifier 55, which is provided with an earpiece socket 58, to play in audio format the news items stored in the memory 52, and optionally to a radio frequency transmitter 56, for example in the FM band, for very low-power transmission of the audio content of the files stored in the memory 52.

The operation of the invention is as follows. When a user wishes to purchase a bulletin, he goes to a distribution unit 2 and inserts the socket 57 of the portable player in the appropriately provided socket 25 of the distribution unit 2.

The distribution unit 2, by means of the display 29, shows the user the sources or type of news items available and the means of playback (audio or printable text).

The news items can be already downloaded beforehand and be therefore available in the memory 22 of the distribution unit or can be retrieved on demand from one or more of the editorial offices 4 over the data communications network 3.

When the user selects the bulletin or the source of the bulletin that he intends to receive, the distribution unit 2 asks the user to pay the required amount and checks that said amount is paid by means of the coin box or currency bill reader 26 or the magnetic card reader 27.

As soon as it has been checked that the necessary amount has been paid by the user, the distribution unit 2 checks whether the required news item is already available in the memory 22, and if not it forwards to an editorial office 4 a request for the file that corresponds to the selected news bulletin by using the modem 24. Then the distribution unit 2 downloads the file that contains the news items from the editorial office 4 by means of the modem 24 and the data communications network, stores it in the internal memory 22 and sends it to the player 5 by means of the I/O driver 25.

The microprocessor 21 can be programmed to download periodically news items in electronic format from the editorial offices 4, for example audio or text files that correspond to the paper version of daily newspapers that are otherwise available at newsstands.

Subsequently, the player 5 stores the file in the memory 52, so that it can subsequently play it back to the user by audio means. In particular, the user can listen to the file downloaded into the memory 52 by means of earpieces connected to the appropriately provided socket 58 or by means of the transmitter 56, by placing the player 5 for example proximate to a car radio.

The received news file can also contain a text file related to the same news items, which can therefore be selected and printed directly by the distribution unit 2 or subsequently, by means of the player 5, by connecting it to an ordinary printer by means of the same socket 57.

In practice it has been found that the system according to the invention fully achieves the intended aim and objects, since it allows to be informed of the news items normally available in newspapers or broadcast by radio and television without having to resort to a paper medium or a radio.

Further, the system according to the invention is provided in particular as an alternative means with respect to the distribution of newspapers in paper format, since it allows the user to have an audio version of the content of newspapers and to print said content on paper only on demand.

Although the system according to the invention has been conceived in particular for the distribution of news bulletins, it can in any case be used more generally to distribute any audio information, for example music.

The system thus conceived is susceptible of numerous modifications and variations, all of which are within the scope of the appended claims; all the details may further be replaced with other technically equivalent elements.

The disclosures in Italian Patent Application No. TV2006A000097 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system for distributing news items in electronic format, **characterized in that** it comprises at least one news distribution unit (2), which is connected to at least one news editorial office (4) over a data communications network (3), and at least one electronic audio file player (5), which can be carried by a user and can be connected detachably to any news distribution unit (2), said at least one news distribution unit (2) being programmed to retrieve news items in electronic format from said at least one editorial office (4) over the data communications network (3) and to store said news items in said at least one player (5), so that said player (5) can play said news items in audio format.

2. The system according to claim 1, comprising a plurality of said news distribution units (2).

3. The system according to claim 1 or 2, **characterized in that** said at least one distribution unit (2) comprises a microprocessor (21) which stores instructions for: receiving a request for news from the user; retrieving said news from said at least one editorial office (4) or from a memory (22) which is internal to the distribution unit; and storing said news items in said at least one player (5).

4. The system according to claim 3, **characterized in that** said microprocessor further comprises instructions for checking a payment for said news items by the user.

5. The system according to one or more of the preceding claims, **characterized in that** said at least one distribution unit (2) comprises at least one means for paying for said news items which is chosen among a coin box, a currency bill reader (26) and a magnetic card reader (27).

6. The system according to one or more of the preceding claims, **characterized in that** said at least one distribution unit (2) further comprises a printer (28), in order to print on paper in a readable manner said news items in electronic format.

7. The system according to one or more of the preceding claims, **characterized in that** said at least one distribution unit (2) comprises at least one tool for writing data on a physical memory medium, preferably of the magnetic or optical type.

8. The system according to claim 7, **characterized in that** said at least one instrument for writing data on a physical memory medium is a DVD and/or CD writer.

9. The system according to one or more of the preceding claims, **characterized in that** said player (5) is of the portable type and comprises a communications port (57), which is suitable to be connected to an appropriate port (25) of the distribution unit (2), in order to be able to receive and store the news items in electronic format retrieved from said distribution unit.

10. The system according to claim 9, **characterized in that** said port (57) of the player can be connected to a printer in order to print legibly on paper said news items in electronic format.

11. The system according to one or more of the preceding claims, **characterized in that** said data communications network (3) is one selectively among the Internet, a wireless communications network and a mobile telephony network.
